# EUROPEAN PATENT SPECIFICATION

(11) **EP 0 404 063 B1**
(45) Date of publication and mention of the grant of the patent: **13.09.1995**
(21) Application number: 90111566.7
(22) Date of filing: 19.06.1990
(51) Int. Cl.: H04L 12/56, H04Q 3/00

(54) **Subscriber line interface circuit in a switching system**
Schnittstellenschaltung für Teilnehmerleitungen in einem Vermittlungssystem
Circuit d'interface pour lignes d'abonné dans un système de commutation

(30) Priority: 19.06.1989 JP 156292/89; 20.11.1989 JP 299551/89
(43) Date of publication of application: 27.12.1990
(73) Proprietor: Oki Electric Industry Company, Limited, Tokyo 105 (JP)
(72) Inventor: Kihara, Kouichi, Minato-ku, Tokyo (JP); Yamamoto, Kazushige, Minato-ku, Tokyo (JP)
(74) Representative: Betten & Resch

(56) References cited:
- EP-A- 0 068 865
- EP-A- 0 075 998
- EP-A- 0 241 152
- WO-A-84/03191
- US-A- 4 774 706

## Description

### BACKGROUND OF THE INVENTION

The present invention relates to a subscriber line interface circuit in an asynchronous transfer mode switching system, particularly to a packet communication signal processing circuit for assembling and disassembling the packet and processing voice signals and a digital signal processing processor employed in a packet communication switching system.

It is effective to provide a packet communication capable of switching and processing diversified media having different speed and protocol such as audio, data, video and the like to realize a multimedia communication composed of a unified diversified media. Voice and video signals have characteristics to vary momentarily in information quantiy thereof, hence the amount of transmission of information can be varied dynamically in response to the characteristic of the signals for thereby performing the transmission with high efficiency.

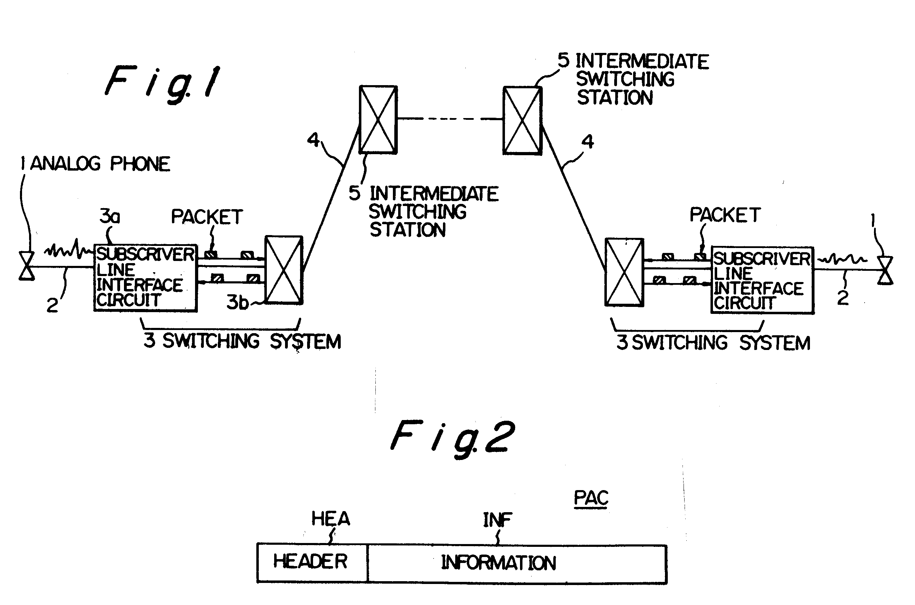

Voice signals in a packet communication network will be described with reference to a flow chart of Fig. 1.

The voice analog signals generated at an analog phone 1 is transmitted via a subscriber line 2 to a switching system 3 composed of a subscriber line interface circuit 3a and a switch circuit 3b wherein the voice analog signal is assembled as a packet at the subscriber line interface circuit 3a and output from the switch circuit 3b to a high speed digital line 4. The packet thus assembled at the switching system 3 at a calling party is transmitted to a switching system 3 at a called party by way of a plurality of intermediate switching stations 5 whereby the packet is disassembled to reproduce the voice analog signal which is supplied to the analog phone 1 at the called party.

A format of the packet thus transmitted will be illustrated in Fig. 2.

The packet format PAC comprises a header HEA and information INF wherein the header HEA is composed of an address of the called party and the property of the packet and information INF is composed of a pulse-code modulated voice data (e.g. CCITT recommendation G711, G721).

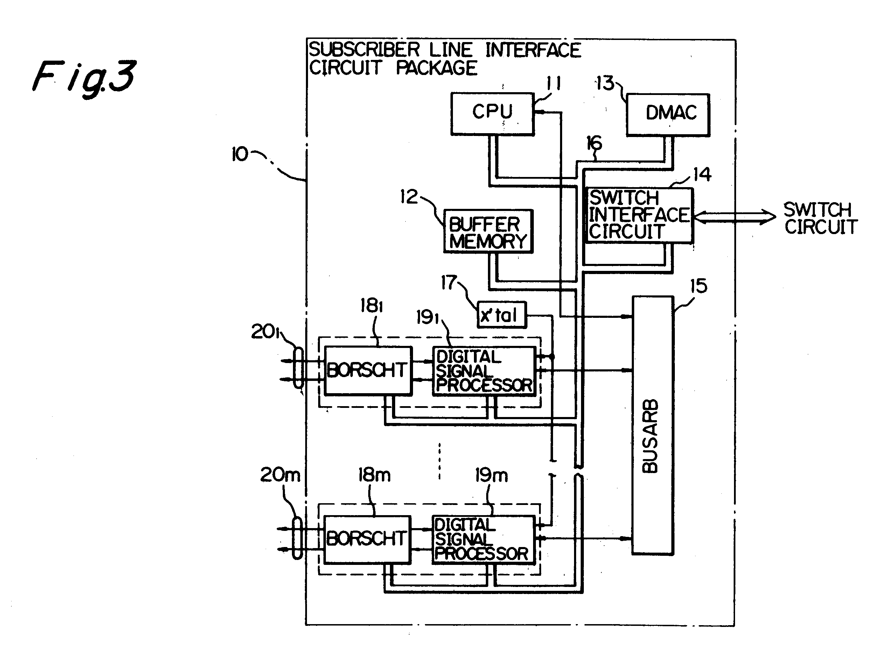

A basic arrangement of a conventional subscriber circuit in a switching system 3 will be described with reference to Fig. 3. The subscriber line interface circuit package accomodates m number of subscriber lines.

The subscriber line interface circuit package 10 comprises a microprocessor 11, a buffer memory 12, a direct memory access controller DMAC 13, a switch interface circuit SWINF 14, a bus arbitrary circuit BUSARB 15, an internal common bus 16, a clock generator 17, a plurality of line terminal circuits 18₁ - 18ₘ (the number of m in this case, hereinafter referred to as BORSCHTs) and a plurality of digital signal processors DSP 19₁ -19ₘ (the number of m in this case).

Each of the BORSCHTs 18₁ -18ₘ is connected to each of subscriber lines 20₁ -20ₘ. More in detail, BORSCHT comprises a battery feed circuit, an overvoltage protection circuit, a ring circuit, a supervision circuit, a coding decoding circuit, a hybrid circuit and a testing circuit. The analog voice signals supplied by the subscriber lines 20₁ to 20ₘ are converted to PCM voice signals which are supplied to the digital signal processors 19₁ -19ₘ and the PCM voice signals supplied by the digital signal processing 19₁ - 19ₘ are converted to the analog signals which are supplied to the subscriber lines 20₁ to 20ₘ. The battery feed circuit, the ring circuit, and the supervision circuit are operated in accordance with a call progress under the control of the microprocessor 11. Each of the digital signal processors 19₁ - 19ₘ serves to assemble or disassemble the packet and subjects the voice signals to various signal processings. The digital signal processors 19₁ - 19ₘ supply the packets assembled inside thereof to the buffer memory 12 by way of the internal common bus 16, hence the assembled packets are stored in the buffer memory 12. The microprocessor 11 is informed of the storage of the assembled packets in the buffer memory 12. On the other hand, when the packet is received by the subscriber line interface circuit package 10, the digital signal processors 19₁ to 19ₘ are informed of the reception of the receiving packet by the microprocessor 11. The digital signal processors 19₁ - 19ₘ, thus informed reception of the receiving packet, extract the receiving packet from the buffer memory 12.

The buffer memory 12 temporarily stores the packet data at the time when the packet data is transferred between the data signal processors 19₁ - 19ₘ and the switch interface circuit 14. The switch interface circuit 14 is the interface circuit for interfacing between the switch circuit of the packet switching and the buffer memory 12. The direct memory access controller 13 serves to control a data transfer between the buffer memory 12 and the switching interface circuit 14 upon reception of the instruction from the microprocessor 11. The bus arbitrary circuit 15 is a contention control circuit for transferring the data in the subscriber line package 10 by way of the internal common bus 16.

The microprocessor (central processing unit) 11 subjects the digital signal processor 19₁ -19ₘ and the BORSCHTs 18₁ to 18ₘ to various call progresses and controls to transfer the packet data between the switching interface circuit 14, the buffer memory 12 and the digital signal processors 19₁ - 19ₘ.

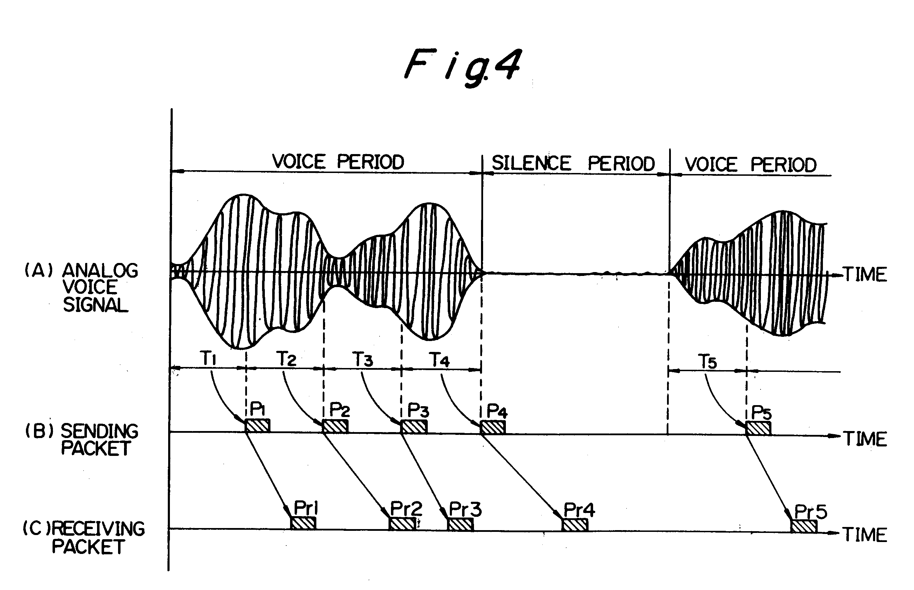

Fig. 4 is a view showing the process of generation and transmission of the packet to be effected by the subscriberline interface circuit 10.

The analog voice signal generated at the terminal of the transmitting side is illustrated in Fig. 4(A). As is evident from the waveform in Fig. 4(A), there are mixed a voice period and silence period. The digital signal processor 19 in the subscriber line interface circuit of the calling party identifies voice or silence period in the analog voice signal for thereby packetizing only the signal during the voice period as illustrated in Fig. 4(B). In the voice period unit Tn (n is 1, 2, ... 5, addressing packet Pn. It is recognized that about 50 % of the call made between the subscribers, namely, the calling party and the called party is in a non-conversation state. Hence, compressing the silence periods entails to improve the efficient use of lines of the packet switched network (asynchronous communication network) and the packet switch circuit.

Whereupon, it is necessary to require a buffer memory for storing voice data at least for one packet to discriminate between the voice period and the silence period. This means the voice or silence period is discriminated after the voice data for one packet is stored and the stored packet is discarded in case of silence period. A near-end echo generated by the hybrid circuit in the BORSCHT 18 is liable to be cancelled by the digital signal processor 19. Furthermore, to code the voice signal for reducing information quantity in the voice signal there is a likelihood of subjecting the voice signal to a voice band-width compression signal processing such as an adaptive differential PCM signal and the like.

As evident from the comparison betweeen the illustrations of Fig. 4(B) and Fig. 4(C), the receiving or addressed packets Pr1 , Pr2, ... do not arrive in given intervals due to delay variation even if the sending or addressing packets P1, P2, ... are transmitted in given intervals. Each packet is subjected to queuing control when it passes the switch circuit in a packet switched network because the queuing time is momentarily varied in response to traffic of the packet switched network. Still furthermore, each packet does not always pass the same intermediate route when it is transmitted from the subscriber line interface circuit at the calling party to that of the called party. To absorb the delay variation, it is effective to store the packet in the buffer memory. However, there are following problems in the subscriber line interface circuit.

A sampling clock signal to be used in the coding decoding circuit in the BORSCHTs 18₁ to 18ₘ is asynchronous with the frequency generated by a clock generator 17 for supplying a system clock signal to each digital signal processor 19₁ to 19ₘ, hence a signal-to-noise ratio (S/N ratio) is deteriorated both in the analog/digital and digital/analog conversions.

In the coding circuit of the BORSCHT 18₁ to 18ₘ, the analog signal is converted to a µ-1aw PCM data or an A-law PCM data (CCITT recommendation G711) as a logarithmic compression code which is converted to a linear code in the digital signal processors 19₁ to 19ₘ. The analog signal is not directly converted to the linear code as set forth above, which entails the deterioration of the S/N ratio.

The data transfer in the subscriber line interface circuit package 10 involves the buffer memory 12, the direct memory access controller 13, the bus arbitrary circuit 15, which entails to enlarge the scale of the subscriber circuit.

Furthermore, the control of the BORSCHTs 18₁ to 18ₘ by the microprocessor 11 involves the register for holding the control signal supplied by the microprocessor 11, which entails to enlarge the scale of the subscriber line circuit.

Still furthermore, the complicated process is needed to transfer the data in the subscriber line interface circuit package 10, namely, two stages transfer from or to the buffer memory 12, which lowers the effective processing capacity of the digital signal processors 19₁ to 19ₘ.

In EP-A-0 068 865 there is described a signal transfer arrangement and method for use in a communication system in which voice and data signals as a whole are communicated through the system by a program controlled switching processor.

In EP-A-0 075 998 there is described a digital telephone exchange comprising a plurality of peripheral control domains. Each domain comprises several digital subscriber interface units, a group of digital subscriber sets being connected to each interface unit.

### SUMMARY OF THE INVENTION

To solve the problems of the convertional subscriber circuit set forth above, it is an object of the present invention to provide a subscriber circuit in the switching system capable of reducing the deterioration of the S/N ratio both in the analog/digital and digital/analog conversions to increase the usable information.

It is another object of the present invention to provide a subscriber line interface circuit in the switching system capable of transferring a packet data effectively between the subscriber line interface circuit and an external equipment with a simple procedure.

It is a further object of the present invention to provide a subscriber line interface circuit with a digital signal processor having an improved processing capacity of assembling and disassembling the packet.

It is a still further object of the present invention to provide a small scale subscriber line interface circuit in the switching system.

To achieve the above objects, the subscriber line interface circuit in the switching system according to the present invention comprises:
(a) a plurality of line terminal circuits(hereinafter referred to as BORSCHTs) for subjecting subscriber lines to a terminal processing;
(b) a plurality of packet communication signal processing circuits for receiving and sending an analog voice signal from and to the plurality of BORSCHTs,
(c) a switch interface circuit connected with the plurality of the packet communication signal processing circuits for interfacing packet data between a switching circuit of a switching system and the plurality of packet communication signal processing circuits; and
(d) a central processing unit for controlling the plurality of packet communication signal processing circuits.

The packet communication signal processing circuit in the subscriber line interface circuit set forth above comprises:
(a) a digital signal processor for assembling and disassembling the packet, processing the voice signal, controlling the BROSCHT and effecting contention control of the transmission and reception of the packet data;
(b) an AD-DA converter for converting an analog signal supplied by the BORSCHT into a digital signal which is supplied to the digital signal processor and converting a digital signal supplied by the digital signal processor to an analog signal which is supplied to the BORSCHT wherein the AD-DA converter is constituted in accordance with an oversampling system; and
(c) a phase locked loop circuit for supplying a signal, which is synchronous with the communication network, to the digital signal processor and the AD-DA converter;

wherein
the packet communication signal processing circuits and the central processing unit are connected with each other by a system bus through which the digital signal processor executes a call processing or progress and a voice signal processing in response to the instruction of the central processing unit;
the BORSCHTs and the packet communication signal processing circuits are connected with each other by local buses through which the packet communication signal processing circuits controls the BORSCHTs;
and the packet. communication signal processing circuits and a switch interface circuit are connected with each other by input and output lines for serial data through which each of the packet communication signal processing circuits and the switch interface circuit are directly serially receiving and sending digital packet data.

### BRIEF DESCRIPTION OF THE DRAWINGS

Fig. 1 is a view showing a flow of an voice signal in a packet switched networks;
Fig. 2 is a view showing a packet format;
Fig. 3 is a block diagram showing a conventional subscriber line interface circuit package;
Fig. 4 is signal waveforms of assistance in explaining generation and transmission of packets;
Fig. 5 is a block diagram showing a subscriber circuit package according to an embodiment of the present invention;
Fig. 6 is a block diagram showing a packet communication signal processing circuit according to the embodiment of the present invention;
Fig. 7 is a block diagram showing a phase locked loop circuit according to the embodiment of the present invention;
Fig. 8 is a timing diagram of signals in each component of the phase locked loop circuit of Fig. 7;
Fig. 9 is a block diagram showing an address generating circuit according to the embodiment of the present invention;
Fig. 10 is a flow chart of assistance in explaining a process of transfer of the packet according to the embodiment of the present invention;
Fig. 11 is a block diagram showing a serial receiving interface circuit according to the embodiment of the present invention;
Fig. 12 is a timing diagram of signals in each component of the serial receiving interface circuit in Fig. 11;
Fig. 13 is a block diagram showing a serial sending interface circuit according to the embodiment of the present invention;
Fig. 14 is a timing diagram of signals in each component of the serial sending interface circuit in Fig. 13; and
Fig. 15 is a block diagram showing a parallel port interface circuit according to the embodiment of the present invention.

### DESCRIPTION OF THE PREFERRED EMBODIMENT

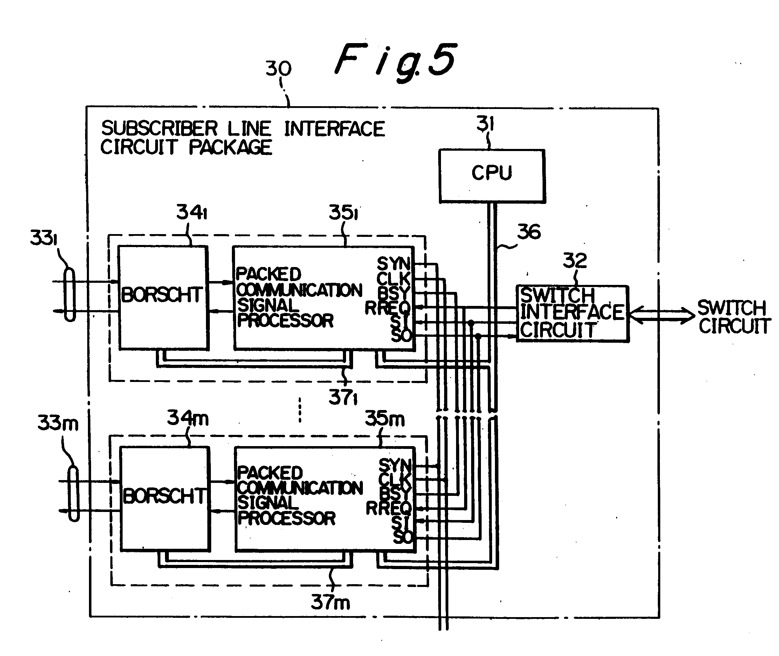

The present invention will be described in detail hereinafter with reference to Figs. 5 to 15 in the order of constitutions thereof. The constitutions of the present invention, namely, an arrangement of a subscriber line interface circuit in a switching system according to a preferred embodiment of the present invention comprises a subscriber line interface circuit package, a packet communication signal processing circuit, a digital signal processing processor, a phase locked loop circuit, an address generating circuit, a serial receiving interface circuit, a serial sending interface circuit and a parallel port interface circuit.

### SUBSCRIBER CIRCUIT PACKAGE:

Fig. 5 is a block diagram showing a subscriber line interface circuit package 30 having subscriber lines to the number of m for embodying the present invention and corresponding to the subscriber line interface circuit 3a as illustrated in Fig. 1.

The subscriber line interface circuit package 30 comprises a microprocessor CPU 31, a switch interface circuit 32 for interfacing with the switch circuit in the switching system as illustrated in Fig. 1, line terminal circuits or so-called BORSCHTs 34₁ to 34ₘ for subjecting subscriber lines 33₁ to 33ₘ to terminal processings and packet communication signal processing processors 35₁ to 35ₘ for assembling and disassembling the packet and processing voice signals.

The switch interface circuit 32 is not connected with a system bus 36. According to the present invention, each of the packet communication signal processing circuits 35₁ to 35ₘ and the switch interface circuit 32 are directly serially receiving and sending data without using the system bus 36. The packet communication signal processing circuits 35₁ to 35ₘ have input and output lines for serial data which are multiconnected (wire ORed).

Furthermore, the line terminal circuits or BORSCHTs 34₁ to 34ₘ are not connected with the system bus 36. The BORSCHTs 34₁ to 34ₘ are connected with the corresponding packet communication signal processing circuits 35₁ to 35ₘ by way of local buses 37₁ to 37ₘ. That is, each of the packet communication signal processing circuits 36₁ to 36ₘ finally controls each of the line terminal circuits 34₁ to 34ₘ. Each of the packet communication signal processing circuits 35₁ to 35ₘ also effects a call control progress.

The voice signals are sent and received as analog signals between packet communication signal processing circuits 35₁ to 35ₘ and corresponding BORSCHTs 34₁ to 34ₘ. Accordingly, the BORSCHTs 34₁ to 34ₘ each employs the analog processing arrangement. More in detail, it comprises a battery feed circuit, an overvoltage protection circuit, a ring circuit, a supervision circuit, a coding decoding circuit, a hybrid circuit and a testing circuit.

An operation of the subscriber line interface circuit package 30 will be described.

Operation modes of the packet communication signal processing circuits 35₁ to 35ₘ provided for the corresponding subscriber lines 33₁ to 33ₘ are determined by the instruction of the host microprocessor 31. The packet communication signal processing circuits 35₁ to 35ₘ control the BORSCHTs 34₁ to 34ₘ provided for the corresponding subscriber lines 33₁ to 33ₘ in accordance with the instruction of the host microprocessor 31 by way of the local buses 37₁ to 37ₘ (e.g. battery feed control, ring control, testing control and the like),collect information of the state of lines of each subscriber line 33₁ to 33ₘ from the BORSCHTs 34₁ to 34ₘ (e.g. loop scanning of the line, numeral information sent out by the phone and the like) and supplies the collected information to the host microprocessor 31.

The analog voice signals supplied by the subscriber lines for the duration of the call to the packet communication processing circuits 35₁ to 35ₘ by way of BORSCHTs 34₁ to 34ₘ. The packet communication signal processing circuits 35₁ to 35ₘ convert the analog voice signals to the digital voice signals by an oversampling analog/digital converter incorporated therein. Furthermore, the packet communication signal processing circuits 35₁ to 35ₘ subject the converted digital signals to a variety of voice signal processings (e.g. noise mixing elimination, voice or silence discrimination, voice coding, near-end echo elimination and the like) and store thus processed digital signal in a memory incorporated therein as an arbitrary packet format. When the data for one packet is stored in the memory, a header is allocated to the packet and a send request flag is made active. The packet communication signal processing circuits 35₁ to 35ₘ sense a busy signal line BSY at the timing prescribed on the basis of a synchronous signal SYN supplied by the packet switched network and check as to whether the packet data can be transferred to the switch interface circuit 32. If the busy signal BSY is inactive, the packet communication signal processing circuits 35₁ to 35ₘ allow the busy signal BSY active so that the packet data is transferred to the switch interface circuit 32 as a serial output data SO. The packet communication signal processing circuits 35₁ to 35ₘ allows the busy signal BSY inactive upon completion of the transfer of the packet data. If the busy signal BSY is active, the packet communication signal processing circuits 35₁ to 35ₘ stop to transmit the packet data and sense the busy signal BSY at the timing prescribed on the basis of the next synchronous signal SYN. The processings set forth above will be repeated until the busy signal BSY becomes inactive.

On the contrary, when the switch interface circuit 32 transfer the received or addressed packet data to one of the packet communication signal processing circuits 35₁ to 35ₘ, the switch interface circuit 32 first allows a packet data receiving request signal RREQ active at the timing assigned to each of the corresponding packet communication processing circuits 35₁ to 35ₘ whereby the packet receiving request flag, incorporated in the designated packet communication signal processing circuits 35₁ to 35ₘ, becomes active. The designated packet communication signal processing circuit 35₁ to 35ₘ check the packet receiving request flag at the timing prescribed on the basis of the synchronous signal SYN supplied by the packet switched network. If the packet receiving request flag is active, the packet communication signal processing circuits 35₁ to 35ₘ receive the packet data from the switching interface circuit 32 and store the packet data in the memory incorporated therein. The packet communication signal processing circuits 35₁ to 35ₘ allows the packet receiving request flag inactive upon completion of reception of the packet data. Thereafter, the packet communication signal processing circuits 35₁ to 35ₘ extract the received packet data from the internal memory, analyze the header for subjecting the packet data to various voice signal processings, convert it to the analog voice signal by the oversampling digital/analog converter and supply the analog voice signal to the subscriber lines 33₁ to 33ₘ by way of the BORSCHTs 34₁ to 34ₘ.

### PACKET COMMUNICATION SIGNAL PROCESSING CIRCUIT

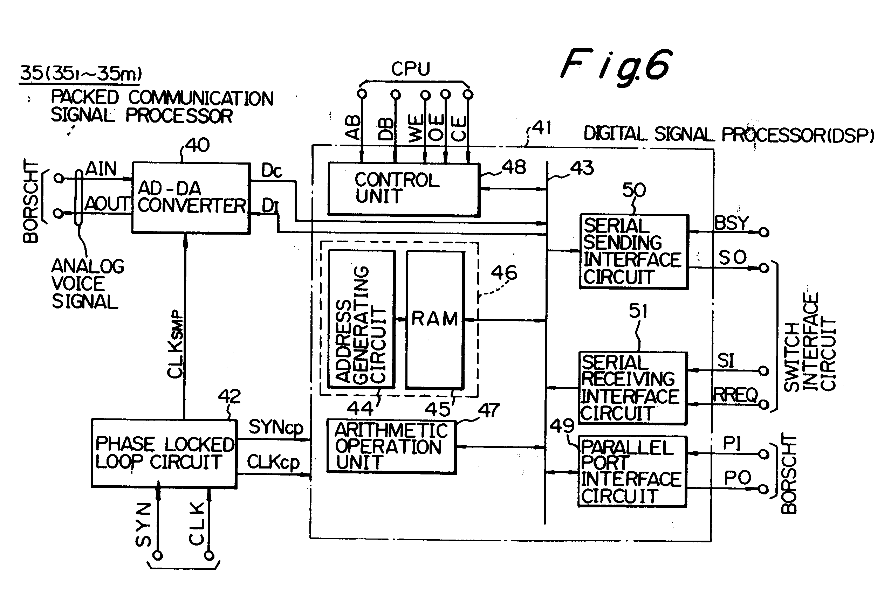

The packet communication signal processing circuits 35₁ to 35ₘ will be described more in detail with reference to Fig. 6 showing the arrangement thereof comprising one large-scale integrated circuit (LSI).

In Fig. 6, the packet communication signal processing circuit 35₁ to 35ₘ comprises an analog/digital digital/analog converter 40 (hereinafter referred to as AD DA converter) operable in accordance with an oversampling system, a digital signal processor DSP 41 and a phase locked loop circuit PLL 42.

A synchronous signal SYN and a clock signal CLK are signals which are synchronous with a communication network and supplied from a host device of the subscriber line interface circuit package 30 to the phase locked loop circuit PLL 42. The phase locked loop circuit PLL 42 generates new synchronous signal SYNCP and two kinds of clock signals CLKCP, CLKSMP both of which are respectively synchronous with the synchronous signal SYN and the clock signal CLK and supplies the thus generated synchronous signal SYNCP and the clock signal CLKCP to the digital signal processor 41 and the clock signal CLKSMP to the AD-DA converter.

The analog voice signal AIN supplied by the BORSCHTs 34₁ to 34ₘ is sampled at high speed in the AD-DA converter 40 on the basis of the clock signal CLKSMP and converted to a digital signal DC which is supplied to the digital signal processor 41. On the other hand, a digital signal DI provided by the digital signal processor 41 is converted to an analog signal AOUT in the AD-DA converter 40 on the basis of the clock signal CLKSMP and thereafter supplied to the BORSHTs.

The digital signal processor DSP 41 and the phase locked loop circuit PLL 42 respectively constituting the packet communication signal processing circuit 35 will be described in detail. Inasmuch as the AD-DA converter 40 has not a featured arrangement, the explanation thereof will be omitted.

### DIGITAL SIGNAL PROCESSOR (DSP)

The digital signal processor DSP 41 executes a call processing or progress and an voice signal processing in response to the instruction of the host microprocessor 31 and supplies information obtained by the call progress to the host microprocessor 31.

The digital signal processor DSP 41 comprises, as illustrated in Fig. 6, an address generating circuit 44, a memory 46 having a RAM 45, an arithmetic operation unit 47 and a control unit 48. The memory 46, the arithmetic operation unit 47 and the control unit 48 are respectively connected with each other via an internal data bus 43 so that the data can be transferred to each other. The arithmetic operation unit 47 executes an arithmetic operation and a logical arithmetic operation needed for effecting the call progress and the voice signal processing. The control unit 48 is connected with the microprocessor by way of an address bus AB, a bilateral data bus DB, a signal line for a write enable signal WE, a signal line for a read enable signal OE and a signal line for a chip enable signal CE . A ROM is not illustrated in Fig. 6 but it can be provided to be coexistent in the RAM 45 in the memory 46.

The digital signal processor DSP 41 is connected with a parallel port interface circuit 49 by way of the internal data bus 43. The parallel port interface circuit 49 is connected with the BORSCHTs 34₁ to 34ₘ by way of signal lines for a parallel data input P1 and a parallel data output PO for receiving and sending data needed for the call progress, testing, maintenance, supervision and the like. The digital signal processor DSP 41 is further connected by way of the internal bus 43 with a serial sending interface circuit 50 for sending and receiving the packet data to and from the packet switch and a serial receiving interface circuit 51 for receiving the packet data. The serial sending interface circuit 50 and the serial receiving interface circuit 51 are respectively connected with the switch interface circuit 32 and the other packet communication signal processing circuits 35₁ to 35ₘ by way of signal lines for sending and receiving a busy signal BSY, sending a serial output data SO, receiving a serial input data SI and a receiving request signal RREQ.

### PHASE LOCKED LOOP CIRCUIT(PLL):

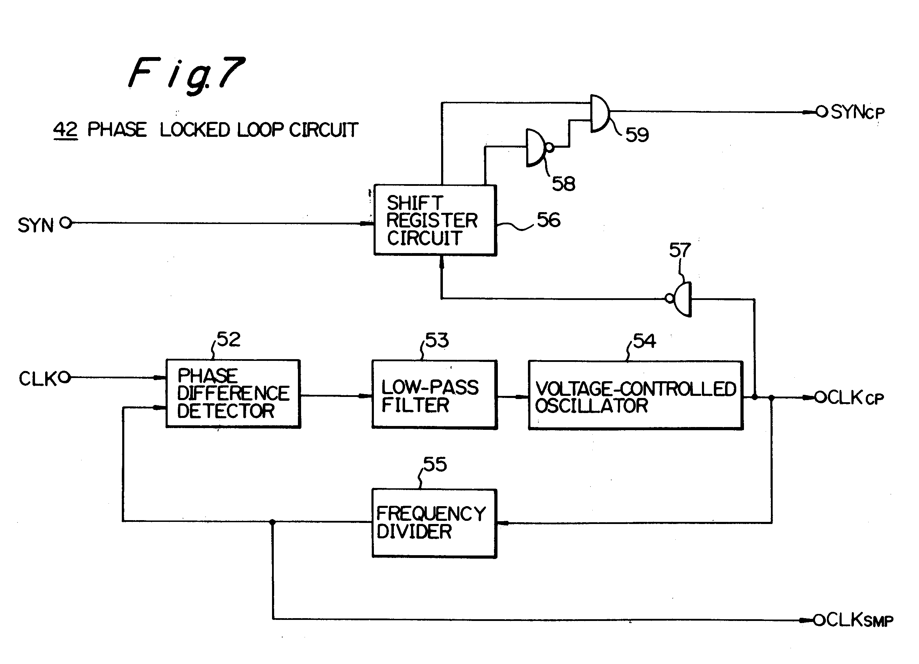

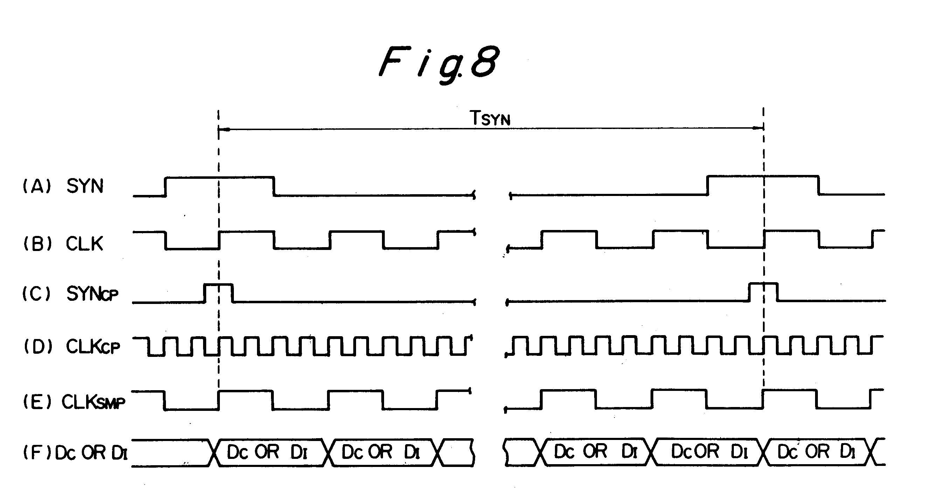

Fig 7 is a block diagram showing in detail the phase locked loop circuit PLL 42 as illustrated in Fig. 6. Fig. 8 is a timing diagram of signals in each constituent of the phase locked loop circuit PLL 42.

The phase locked loop circuit PLL 42 comprises, as well known, a phase difference detector 52, a low-pass filter LPF 53, a voltage-controlled oscillator VCO 54 and a frequency divider 55. The phase locked loop circuit PLL 42 further comprises, in addition to the constituents set forth just above, two NAND gates 57, 58 and an AND gate 59.

The voltage-controlled oscillator VCO 54 creates a clock signal CLKLP (Fig. 8(D)) which is supplied to the digital signal processor 41. The clock signal CLKCP is divided into a frequency of a predetermined fraction by the frequency divider 55. The thus divided frequency is supplied from the frequency divider 55 as a clock signal CLKSMP (Fig. 8 (E)) to the AD-DA converter 40 and the phase difference detector 52. A clock signal CLK which is synchronous with the packet switched network is supplied to the phase difference detector 52. The phase difference detector 52 generates a pulse corresponding to the phase difference between the clock signal CLKSMP and the clock signal CLK. The phase difference pulse is converted to a direct current signal by the low-pass filter 53 and supplied to the voltage-controlled oscillator 54 as a frequency control signal. The high speed clock signal CLKCP is made to be synchronous with the clock signal CLK.

The synchronous signal SYN (Fig. 8(A)) has a pulse width corresponding to one clock of the clock signal CLK and frequency which is twice the bandwidth of the analog voice signal. The phase locked loop circuit PLL 42 creates a synchronous signal SYNCP (Fig. 8(C)) which is sycnchronous with the synchronous signal SYN and supplied to the digital signal processor 41. The shift register circuit 56 receives the synchronous signal SYN as the data and an inversed clock signal of the clock signal CLKCP which is provided by the NAND gate 57 by inverting the clock signal CLKCP as the shifting clock signal. The output of the shift register 56 at some stage shifted (second stage in Fig. 8) is directly supplied to the AND gate 59 and the output of the shift register 56 at the stage shifted for the increment of one stage is inverted by the NAND gate 58 and supplied to the AND gate 59. Hence, the AND gate 59 supplies an output synchronous signal CYNCP having a pulse width corresponding to one clock pulse of the clock signal CLKCP to the digital signal processor 41 at the data timing as illustrated in Fig. 8(F).

The phase locked loop circuit PLL 42 is included in one LSI constituting the packet communication signal processing circuit 35 in order to utilize the output of the synchronous signal which is synchronous with the switched network so that the arrangement thereof is simplified and synchronization is intended. If the phase locked loop circuit PLL 42 is provided outside the LSI, there produces a serious problem of the crosstalk in processing a high frequency signal, hence the phase locked loop circuit PLL 42 is included in one LSI.

An overall operation of the packet communication signal processors 35₁ to 35ₘ will be described hereinafter.

All the operation modes of the packet communication signal processing circuits 35₁ to 35ₘ are determined by the instruction of the host computer 31. The packet communication signal processing circuits 35₁ to 35ₘ control the BORSCHTs 34₁ to 34ₘ by way of the parallel port interface circuit 49 on the basis of the instruction of the host microprocessor 31 (battery feed control, ringing control, testing control) and collect the line state from the BORSCHTs (e.g. loop scanning of the lines, numerical information sent out from the phone), then notify the thus collected information to the host microprocessor 31.

The voice analog signal AIN provided by the BORSCHTs 34 for the duration of the call is converted to the digital signal by the AD-DA converter 40 which is supplied to the digital signal processor 41. The digital signal is subjected to various voice signal processings (e.g. noise mixing elmination, voice or silence discrimination, voice coding, near-end echo elmination and the like) and stored thereafter in the memory 46 as an arbitrary packet format. When the data for one packet is stored in the memory 46, the digital signal processor 41 allocates a header to the packet and transfer the packet to the switch circuit of the packet switching at high speed by way of the serial sending interface circuit 50.

On the other hand, the received packet transferred from the switch circuit of the packet switching is temporarily stored in the memory 46 by way of the serial receiving interface circuit 51. Thereafter, the digital signal processing processor 41 extracts the received packet data from the memory 46, analyzes the header and subjects the packet data to various voice signal processings which data is supplied to the AD-DA converter 40. The packet data is subjected to the digital/analog conversion in the AD-DA converter 40 and supplied to the BORSCHTs as the analog voice signal AOUT.

The address generating circuit 44, the serial receiving interface circuit 51, the serial sending interface circuit 50 and the parallel port interface circuit 49 respectively constituting the digital signal processor 41 will be described more in detail hereinafter.

The arithmetic operation unit 47 comprises an arithmetic and logic unit ALU, multiplier, register and accumulator ACC and the like. The control unit 48 comprises an instruction register and the like. However, both the arithmetic operation unit 47 and the control unit 48 have no featured arrangement, hence the explanation thereof will be omitted.

### ADDRESS GENERATING CIRCUIT

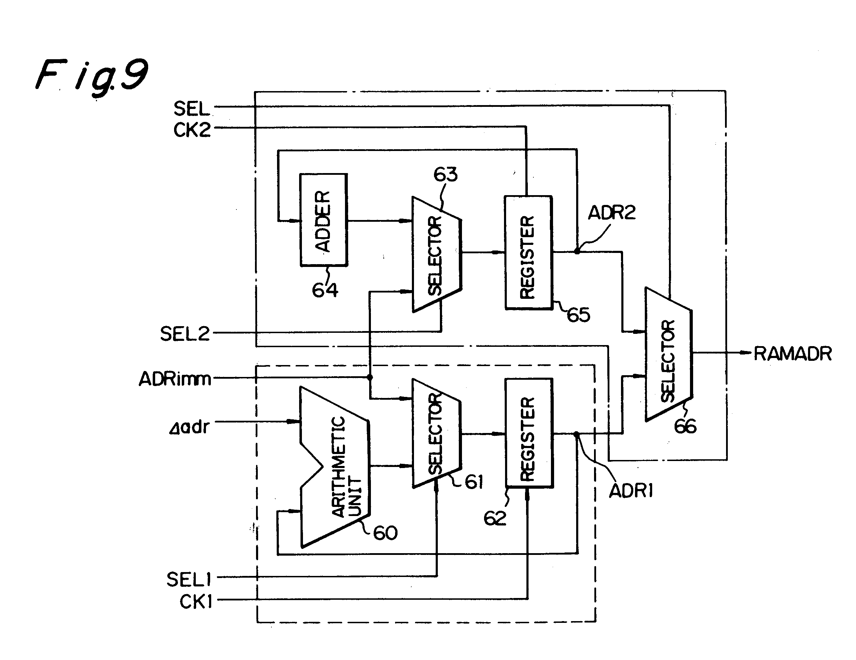

Fig. 9 is a block diagram showing an arrangement of the address generating circuit 44.

The address generating circuit 44 has an arithmetic unit 60 for adding a first address signal ADR1 to an address varing signal Δadr. An output signal of the arithmetic unit 60 is supplied to the input of a selector 61 together with an immediate addressing signal ADRimm for determining the initialization. The selector 61 selects the immediate addressing signal ADRimm or the output of the arithmetic unit 60 on the basis of the selection signal SEL1 and has an output connected to a register 62. The register 62 stores the output of the selector 61 and provides a first address signal ADR1 on the basis of the synchronization with a latch clock signal CK1.

A selector 63 selects an output of an adder 64 or the immediate addressing signal ADRimm on the basis of a selection signal SEL2 and has an output connected to a register 65. The register 65 stores temporarily the output of the selector 63 and provides a second address signal ADR2 on the basis of the synchronization of a latch clock signal CK2. The second address signal ADR2 is supplied commonly to the input of the adder 64 and one input of a third selector 66.

The adder 64 is a circuit to add 1 to the second address signal ADD2. The selector 66 selects one of the first address signal ADR1 and the second address signal ADR2 and provides an address output signal RAMADR.

The second address signal ADR2 is a signal to get access to the RAM 45 at the time of transfer of the packet data and the first signal ADR is a signal to get access to the RAM 45 at the time when the packet data is not transferred.

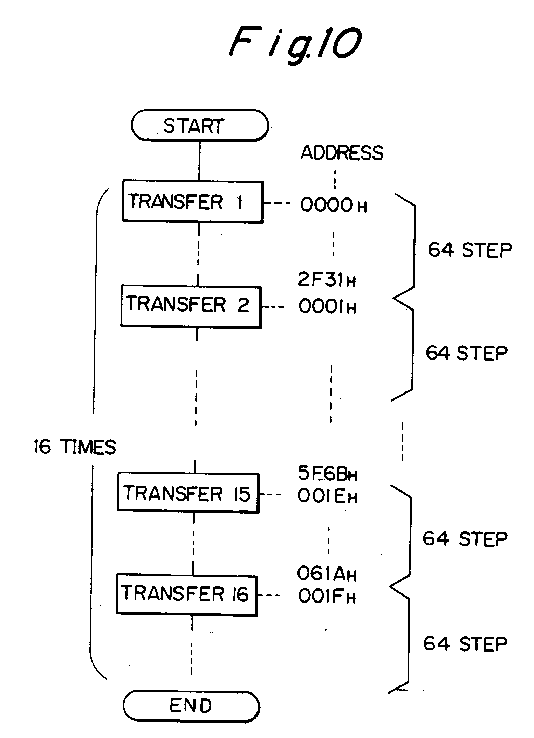

An operation of the address generating circuit 44 will be described with reference to the flow chart showing the transfer of the packet as illustrated in Fig. 10.

The voice input signal is, at the time of transfer of the packet, first converted to the packet data format and stored in the RAM 45.

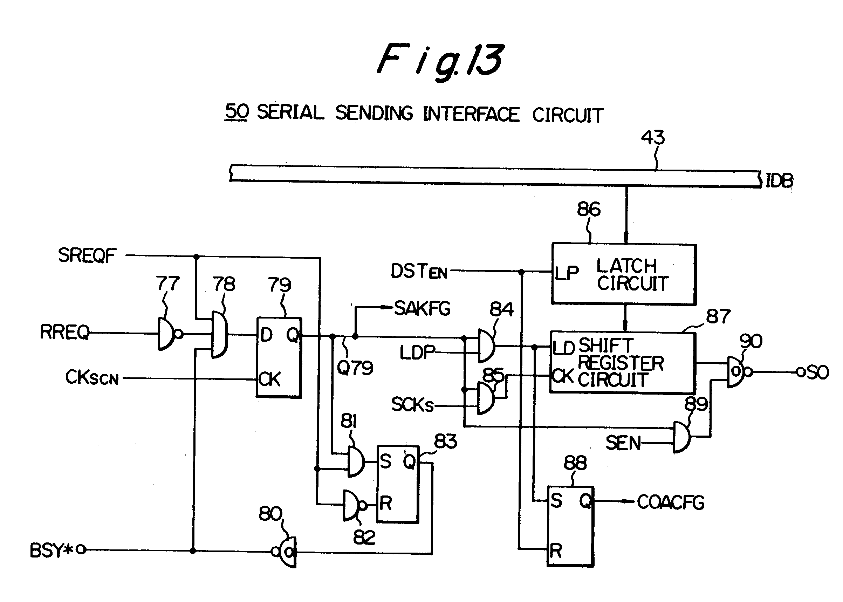

When given packet data are stored in the RAM 45, a flag for requesting sending of the packet (SREQF in Fig. 13 described later) is set whereby the select signal SEL of the selector 66 is controlled to select the second address signal ADR2. Assume that the first address location for transferring the packet data is previously determined and the initial address thereof is stored in the register 65 by the immediate address signal ADRimm, the address signal ADR2 as the output thereof is supplied to the RAM 45 as the address output signal RAMADR. As a result, the packet data corresponding to the second address signal ADR2 is read and transferred to the serial sending interface circuit 50. At the same time, the latch clock signal CK2 is supplied to the register 65 which stores the value obtained by adding 1 to the present address. Therefore, the select signal SEL of the selector 60 is controlled to select the first address ADR1 whereby the digital signal processor 41 returns to execute the processing other than the tranfer of the packet.

Assuming that the processing speed by the digital signal processor 41 relative to that by the serial sending interface circuit 50 is 1:64, the packet data is transmitted from the RAM 45 to the serial sending interface circuit 50 by the transfer order every 64 steps as illustrated in Fig. 10.

The flow chart of Fig. 10 shows transfer operations of the packet data having 16 words, namely, transfer operations repeated 16 times. For example, at Transfer 1, the data stored in the address 0000H of the RAM 45 is first read and supplied to the serial sending interface circuit 50. Upon completion of the transfer of the packet in Transfer 1, the digital signal processor 41 starts to process other signals. Upon completion of processing of the signal located in the address 2F31H of the RAM 45 at the 64th step, a second packet transfer, namely, Transfer 2 starts. Thereafter the transfer operations for 16 times are repeated until Transfer 16 is completed.

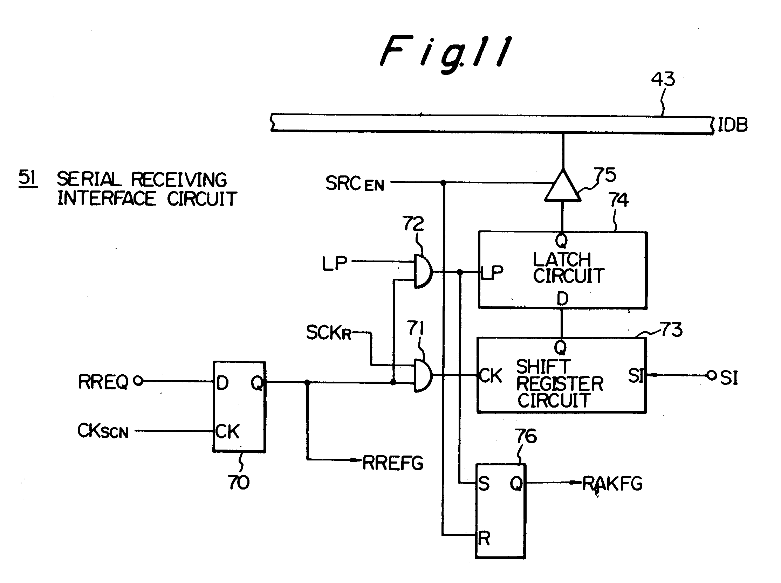

In the case of reception of the packet data, a flag for requesting reception of the packet (RREFG described later in Fig. 11) is set in the same manner at the time of sending the packet data, the packet data is successively transferred to and stored in the RAM 45. Thereafter the packet data is subjected to a reproduction procesing and supplied to the AD-DA converter 40 whereby the analog voice output signal is produced.

### SERIAL RECEIVING INTERFACE CIRCUIT

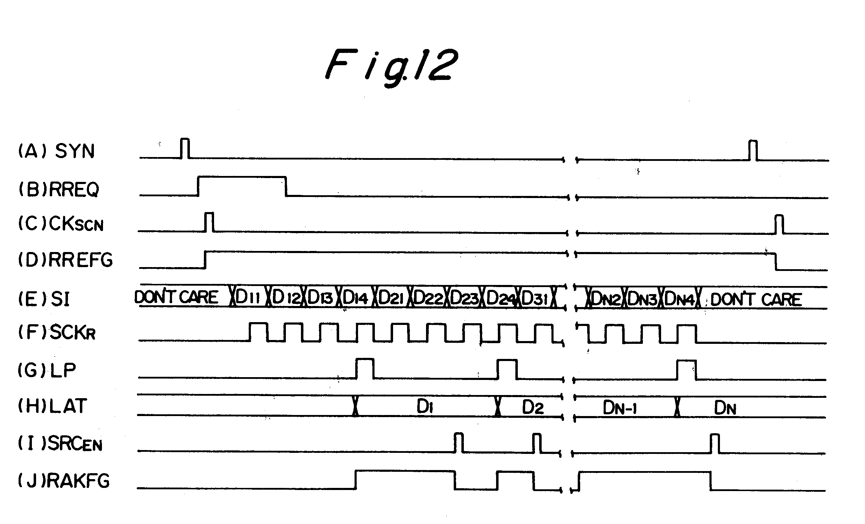

The serial receiving interface circuit will be described in detail with reference to Fig. 11 showing an arrangement thereof and Fig. 12 showing a timing of signals in each component thereof.

The serial receiving interface circuit 51 comprises a D-type flipflop circuit 70, AND gates 71, 72, a shift register 73, a latch circuit 74, a three-state buffer circuit 75 and an RS flipflop circuit 76 for converting the serial receiving packet to the parallel receiving packet and supplying the parallel receiving packet to the internal data bus 43.

The receiving request signal RREQ (Fig. 12(B)) which becomes active when the packet data is supplied to the subscriber line interface circuit is supplied to the digital signal processor circuit 41. The receiving request signal RREQ is supplied to a data terminal of the D-type flipflop circuit 70. There is supplied a clock pulse signal CKSCN (Fig. 12(C)) having the same cycle (hereinafter referred to as frame) as a synchronous signal SYN (Fig. 12(A)) to a clock terminal of the D-type flipflop 70. The receiving request signal RREQ is sampled by the clock pulse signal CKSCN in the D-type flipflop circuit 70 wherein the receiving request flag (Fig. 12(D)) is set. The receiving request flag RREFG is supplied to the control unit 48 of the digital signal processor 41 for informing the receiving request from the external equipment and to the AND gates 71 and 72 as a passage control signal.

A shift clock pulse signal SCKR (Fig. 12(F)) which passes the AND gate 71 when it operates and supplied to the shift register 73 e.g. the clock signal CLKCP has the same pulse in one frame thereof as the number of bits constituting the packet. A latch pulse signal LP (Fig. 12(G)) which passes the AND gate 72 when it operates and supplied to the latch circuit 74 is generated every given number of bits in which the serial data is significant in synchronism with the shift clock pulse signal SCKR.

The shift register circuit 73 converts a serial input to a parallel output and receives a serial receiving data SI (Fig. 12(E)) at the time of packet receiving operation on the basis of the shift clock pulse signal SCKR passed by the AND gate 71. The data received by the shift register circuit 73 and converted to the parallel output is supplied to a data terminal D of the latch circuit 74. The latch circuit 74 latches the output of the shift register circuit 73 on the basis of the latch pulse signal LP provided by the AND gate 72 and supplies the latch output LAT (Fig. 12(H)) to the three-state buffer circuit 75.

The RS flipflop receives the output LP of the AND gate 72 at its set terminal S and is set at the instant when the latch circuit 74 laches the output of the shift register 73. The RS flipflop 76 supplies a receiving acknowledge flag RAKFG (Fig. 12(J)) from its output terminal Q and inform the control unit 48 of the digital signal processor 41 of completion of a partial receipt of the packets.

When the receiving acknowledge flag RAKFG is active, a source enable signal SRCEN (Fig. 12(I)) indicative of reception enable state relative to a signal source becomes active. The source enable signal is supplied to a control terminal of the three-state buffer circuit 75 and a reset terminal R of the RS flipflop circuit 76. When the source enable signal SRCEN is active, the output data of the latch circuit 74 is supplied to the internal data bus 43 and the RS flipflop circuit 76 is reset to allow the receiving acknowledge flag RAKFG inactive so that the RS fipflop 76 is ready to receive the next data of a given number of bits.

The operations are repeated until the data for one packet is received.

### SERIAL SENDING INTERFACE CIRCUIT

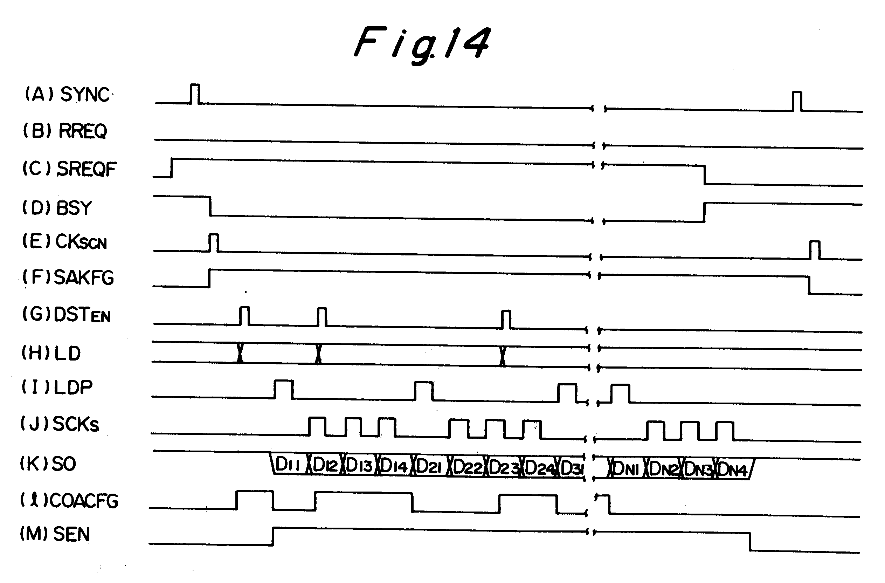

The serial sending interface circuit will be described with reference to Fig. 13 showing the arrangement thereof and Fig. 14 showing a timing of signals in each component thereof.

The serial sending interface circuit 50 comprises NAND gates 77, 82, AND gates 78, 81, 84, 85, 89, a D-type flipflop circuit 79, an open collector (or drain) NAND gate 80, RS flipflop circuits 83, 88, a latch circuit 86, a shift register circuit 87 and an open collector (or drain) NAND gate 90 and converts the parallel data supplied via the internal data bus 43 to the serial data which is supplied to the switch interface circit 32 as the addressing packet.

The receiving request signal RREQ (Fig. 14(B)) as explained in the serial receiving interface circuit 51 is also supplied to the serial sending interface circuit 50. This serves as a conflict control for stopping the serial sending operation at the time of serial receiving operation. The receiving request signal RREQ is inverted by the NAND gate 77 and supplied to the AND gate 78.

The sending request flag SREQF (Fig. 14(C)) becomes active when the addressing packet is stored in the memory of the digital signal processor 41 for one packet and inactive upon completion of the sending of the packet. The sending request flag SREQF is supplied to the AND gates 78, 81 and the NAND gate 82.

A busy signal BSY (Fig. 14(D)) provided by an output Q of the RS flipflop is a conflict signal necessitated for use in the multiconnection arrangement of the packet communication signal processing circuits 35₁ to 35ₘ as shown in Fig. 5. The busy signal is inverted to an active low signal BSY (indicating active low) by the NAND gate 80 and supplied to the packet communication signal process circuits 35₁ to 35ₘ excepting concerned circuits 35₁ to 35ₘ and the AND gate 78. As mentioned above, the conflict control is necessitated in the case that the packet communication signal processing circuits 35₁ to 35ₘ are arranged in the multiconnection. Hence, busy terminals of the packet communication signal processing circuits 35₁ to 35ₘ are necessitated to be multiconnected (wire ORed) and pulled up by an external resistor (not shown). The digital signal processor 41 scan the inverted busy signal BSY to ascertain as to whether any packet communication signal processing circuits 35₁ to 35ₘ do not execute the transmission operation at the time of sending the packet data. That is, if the busy singal BSY is "H", the digital signal processor 41 allows the busy signal BSY to be "L" so that the packet communication signal processing circuits 35₁ to 35ₘ can not start to send the packet excepting the concerned circuits 35₁ to 35ₘ and the concerned circuits 35₁ to 35ₘ can thereafter transmit the packet. The digital signal processor 41 makes the busy signal BSY to return to "H" upon completion of the transmission of the packet.

The clock pulse signal CKSCN (Fig. 14(E)) has the same frame as the synchronous signal SYN (Fig. 14(A)) which is supplied to the clock terminal CK of the D-type flipflop circuit 79.

The D-type flipflop circuit 79 samples the output of the AND gate 78 and supplies the output Q to the AND gates 81, 84, 85, 89 as a sending acknowledge flag SAKFG (Fig. 14(F)) and informs the control unit 48 of the digital signal processor 41 that the packet can be transmitted. The active condition of the sending acknowledge flag SAKFG is, due to logical condition of the AND gate 78, (1) there is a sending request for the packet (2) there is no receiving request for the packet and (3) other packet communication signal processing circuits excepting the concerned circuits do not transmit the packet.

The RS flipflop circuit 83 receives at its set terminal S an output of the AND gate 81 which is produced when the sending request flag SREQF and the sending acknowledge flag SAKFG (Q79) are ANDed in the AND gate 81. The RS flipflop circuit 83 receives at its reset terminal R the inverted signal of the sending request flag SREQF from the NAND gate 82. The RS flipflop circuit 83 produces the output Q which is inverted by the open collector NAD gate 80 to form as the busy signal BSY .

That is, when the sending acknowledge flag SAKFG becomes active, the RS flipflop circuit 83 is set so that the inverted busy signal BSY is "L" and informs the other packet communication signal processing circuits 35₁ to 35ₘ that the packet is now transmitting. When the sending acknowledge flag SAKFG becomes inactive, the flipflop circuit 83 is reset so that the inverted busy signal BSY is returned to be "H".

A destination enable signal DSTEN (Fig. 14(G)) is supplied from the digital signal processor 41 to the latch circuit 86 and the RS flipflop 88. When the control unit 48 of the digital signal processor 41 designates the latch circuit 86 as the destination at the time of execution of the transfer instruction order, the destination enable signal DSTEN becomes active and at the same time the RS flipflop circuit 88 is reset. At this time, the Q output of the RS flipflop circuit 88 is provided as a transfer acknowledge flag COACFG (Fig. 14 (ℓ)). The transfer acknowledge flag COACFG keeps inactive until the data latched by the latch circuit 86 is loaded at the shift register circuit 87 and informs the control unit 48 of the digital signal processor 41 that the latch circuit 86 is now operated.

A shift clock pulse signal SCKS (Fig. 14(J)) is a signal having pulses of the same number as the number of bits constituting the packet in one frame and supplied to the AND gate 85 which is operable by reception of the sending acknowledge flag SAKFG. A load pulse signal LDP (Fig. 14(I)) is supplied to the AND gate 84 which is operable by reception of the sending acknowledge flag SAKFG. The shift register circuit 87 is used as a parallel input and a serial output and receives the load pulse signal LDP from the AND gate 84 at the given timing when the packet data is transmitted, thereby loading the latch data of the latch icrcuit 86 (Fig. 14(H)). At the same time, the RS flipflop circuit 88 is set so that the transfer acknowledge flag COACFG becomes active and informs the control unit 48 of the digital signal processor 41 that the latch circuit 86 is not operated. The shift register circuit 87 receives the shift clock signal SCKS from the AND gate 85 at the given timing and supplies the data in the shift register circuit 87 to the open collectorf NAD gate 90 as a serial output, namely, sequentially to the open collector NAND gate 90 (Fig. 14(K)).

A sending enable signal SEN (Fig. 14(M)) is supplied from the control unit 48 to the AND gate 89. The sending enable signal SEN having a cycle corresponding to one frame and becomes active during the period when the shift register 87 keeps to provide the packet data. Hence, when the sending acknowledge flag SAKFG becomes active, the output of the AND gate 89 allows the open collector NAND gate 90 to operate. As a result, the serially converted packet data is supplied to the switch interface circuit 32. The serial sending data SO is necessitated to be pulled up by the external resistance (not shown) since it is the output of the open collector NAND gate 90.

The operations are repeated until the data for one packet is transmitted.

### PARALLEL PORT INTERFACE CIRCUIT

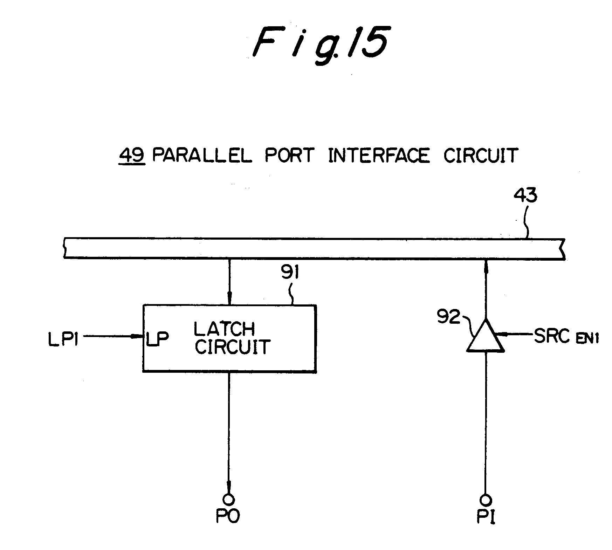

The parallel port interface circuit 49 will be described more in detail with reference to Fig. 15 showing an arrangement thereof in the digital signal processor 41.

The parallel port interface circuit 49 comprises a latch circuit 91 and a three-state buffer circuit 92 and latches the data from the internal bus 43 of the digital signal processor 41 at the timing of the latch pulse signal LP1 and supplies it to the BORSCHTs. The parallel port interface circuit 49 takes the data from the BORSCHTs into the internal data bus 43 by way of the three-state buffer circuit 92 which is operable by a source enable signal SRCEN1.

## Claims

1. A subscriber line interface circuit (3a) in a switching system (3) for converting an analog signal supplied by a susbscriber line (33₁-33ₘ) to a digital packet data which is supplied to a switch circuit (3b) of a switching system (3) and converting a digital packet data supplied by the switch circuit (3b) into an analog signal which is supplied to the subscriber line (2), comprising:
(a) a plurality of line terminal circuits (hereinafter referred to as BORSCHTs (34₁-34ₘ)) for subjecting subscriber lines (33₁-33ₘ) to a terminal processing;
(b) a plurality of packet communication signal processing circuits (35₁-35ₘ) for receiving and sending an analog voice signal from and to the plurality of BORSCHTs (34₁-34ₘ);
(c) a switch interface circuit (32) connected with the plurality of the packet communication signal processing circuits (35₁-35ₘ) for interfacing packet data between the switch circuit (3b) of the switching system (3) and the plurality of packet communication signal processing circuits (35₁-35ₘ); and
(d) a central processing unit (31) for controlling the plurality of packet communication signal processing circuits (35₁-35ₘ);
characterized in that
said packet communication signal processing circuit (35₁-35ₘ) comprises:
a digital signal processor (41) for assembling and disassembling the packet, processing the voice signal, controlling the BORSCHT (34₁-34ₘ) and effecting contention control of the transmission and reception of the packet data;
an AD-DA converter (40) for converting an analog signal supplied by the BORSCHT (34₁-34ₘ) into a digital signal which is supplied to the digital signal processor (41) and converting a digital signal supplied by the digital signal processor (41) to an analog signal which is supplied to the BORSCHT (34₁-34ₘ), wherein the AD-DA converter (40) is constituted in accordance with an oversampling system; and
a phase locked loop circuit (42) for supplying a signal, which is synchronous with a communication network, to the digital signal processor (41) and the AD-DA converter (40);
wherein
the packet communication signal processing circuits (35₁-35ₘ) and the central processing unit (31) are connected with each other by a system bus (36) through which the digital signal processor (41) executes a call processing or progress and a voice signal processing in response to the instruction of the central processing unit (31);
the BORSCHTs (34₁-34ₘ) and the packet communication signal processing circuits (35₁-35ₘ) are connected with each other by local buses (37₁-37ₘ) through which the packet communication signal processing circuits (35₁-35ₘ) controls the BORSCHTs (34₁-34ₘ);
and the packet communication signal processing circuits (35₁-35ₘ) and the switch interface circuit (32) are connected with each other by input and output lines for serial data through which each of the packet communication signal processing circuits (35₁-35ₘ) and the switch interface circuit (32) are directly serially receiving and sending digital packet data.

2. A subscriber line interface circuit (3a) in a switching system (3) according to Claim 1, wherein the plurality of packet communication signal processing circuits (35₁-35ₘ) are each constituted by one large-scale integrated circuit.

3. A subscriber line-interface circuit (3a) in a switching system (3) according to Claim 2, wherein the digital signal processor (41) comprises:
(a) a memory (46) for storing packet data;
(b) an address generating circuit (44) for generating address signals of the memory;
(c) a serial receiving interface circuit (51) for converting a serial receiving packet data supplied by the switch interface circuit (32) to a parallel data;
(d) a serial sending interface circuit (50) for converting the parallel sending packet data to a serial data which is supplied to the switch interface circuit (32); and
(e) a parallel port interface circuit (49) for supplying a control signal to the BORSCHT (34₁-34ₘ) and receiving information of the BORSCHT (34₁-34ₘ).

4. A subscriber line interface circuit (3a) in a switching system (3) according to Claim 1, wherein said address generating circuit (44) comprising:
(a) a first data holding register (62) for providing a first address signal;
(b) an arithmetic unit (60) for receiving the first address signal and an address change signal relative to the first address signal and effecting arithmetic operation thereof;
(c) a first selector (61) for selecting an output of the arithmetic unit or a predetermined address signal of the packet data and supplying the selected output
(d) a second data holding register (65) for providing a second address signal;
(e) an address incrementing means for incrementing the second address signal;
(f) a second selector (63) for selecting an output of the address incrementing means or the predetermined address signal and supplying the selected output; and
(g) a third selector (66) for selecting the first address signal or the second address signal.

## Patentansprüche

1. Schnittstellenschaltung (3a) für Teilnehmerleitungen in einem Vermittlungssystem (3) zum Umwandeln eines analogen Signals, das von einer Teilnehmerleitung (33₁ - 33ₘ) zugeführt wird, in ein digitales Datenpaket, das einer Schalteinrichtung (3b) eines Vermittlungssystems (3) zugeführt wird, und Umwandeln eines digitalen Datenpakets, das von der Schalteinrichtung (3b) zugeführt wird, in ein analoges Signal, das der Teilnehmerleitung (2) zugeführt wird, wobei die Schnittstellenschaltung folgendes aufweist:
(a) eine Vielzahl von Leitungsanschlußschaltungen (im nachfolgenden als BORSCHT-Schaltungen (34₁ - 34ₘ) bezeichnet), um die Teilnehmerleitungen (31₁ - 31ₘ) einer Endstellenverarbeitung zu unterwerfen;
(b) eine Vielzahl von Datenpaket-Kommunikationssignalverarbeitungsschaltungen (35₁ - 35ₘ), zum Empfangen bzw. Übertragen eines analogen Sprachsignals von bzw. zu der Vielzahl von BORSCHT-Schaltungen (34₁ - 34ₘ);
(c) eine Schalteinrichtung-Schnittstellenschaltung (32), die mit der Vielzahl von Datenpaket-Kommunikationssignalverarbeitungsschaltungen (35₁ - 35ₘ) verbunden ist, um als Schnittstelle für die Paketdaten zwischen der Schalteinrichtung (3b) des Vermittlungssystems (3) und der Vielzahl von Datenpaket-Kommunikationssignalverarbeitungsschaltungen (35₁ - 35ₘ) zu dienen; und
(d) eine CPU (31) zum Steuern der Vielzahl von Datenpaket-Kommunikationssignalverarbeitungsschaltungen (35₁ - 35ₘ);
dadurch gekennzeichnet, daß
die Datenpaket-Kommunikationssignalverarbeitungsschaltung (35₁ - 35ₘ) folgendes aufweist:
einen Prozessor (41) für digitale Signale zum Assemblieren und Disassemblieren des Datenpakets, zum Verarbeiten des Sprachsignals, zum Steuern der BORSCHT-Schaltungen (34₁ - 34ₘ), und zum Durchführen der Konkurrenzsteuerung der Übertragung und des Empfangs des Datenpakets;
einen Analog-Digital-/Digital-Analog-Wandler (40) zum Umwandeln eines analogen Signals, das von den BORSCHT-Schaltungen (34₁ - 34ₘ) zugeführt wird, in ein digitales Signal, das dem Prozessor (41) für digitale Signale zugeführt wird, und zum Umwandeln eines digitalen Signals, das vom Prozessor (41) für digitale Signale zugeführt wird, in ein analoges Signal, das den BORSCHT-Schaltungen (34₁ - 34ₘ) zugeführt wird, wobei der Analog-Digital-/Digital-Analog-Wandler (40) entsprechend einem Überabtastsystem arbeitet; und
einer Phasenregelkreis-Schaltung (42), um ein Signal, das mit einem Kommunikationsnetz synchron ist, dem Prozessor (41) für digitale Signale und dem Analog-Digital-/Digital-Analog-Wandler (40) zuzuführen;
wobei
die Datenpaket-Kommunikationssignalverarbeitungsschaltungen (35₁ - 35ₘ) und die CPU (31) durch einen Systembus (36) miteinander verbunden sind, über den der Prozessor (41) für digitale Signale in Reaktion auf eine Anweisung von der CPU (31) eine Rufverarbeitung oder eine Netzmeldung sowie eine Sprachsignalverarbeitung durchführt;
die BORSCHT-Schaltungen (34₁ - 34ₘ) und die Datenpaket-Kommunikationssignalverarbeitungsschaltungen (35₁ - 35ₘ) durch lokale Busse (37₁ - 37ₘ) miteinander verbunden sind, über die die Datenpaket-Kommunikationssignalverarbeitungsschaltungen (35₁ - 35ₘ) die BORSCHT-Schaltungen (34₁ - 34ₘ) steuern;
und wobei die Datenpaket-Kommunikationssignalverarbeitungsschaltungen (35₁ - 35ₘ) und die Schalteinrichtung-Schnittstellenschaltung (32) durch Ein- und Ausgangsleitungen für serielle Daten miteinander verbunden sind, über die jede Kommunikationssignaldatenpaket-Verarbeitungsschaltung (35₁ - 35ₘ) und die Schalteinrichtung-Schnittstellenschaltung (32) digitale Datenpakete direkt und seriell empfangen und übertragen.

2. Schnittstellenschaltung (3a) für Teilnehmerleitungen in einem Vermittlungssystem (3) nach Anspruch 1, bei der die Vielzahl von Datenpaket-Kommunikationssignalverarbeitungsschaltungen (35₁ - 35ₘ) jeweils aus einer hochintegrierten Schaltung bestehen.

3. Schnittstellenschaltung (3a) für Teilnehmerleitungen in einem Vermittlungssystem (3) nach Anspruch 2, bei der der Prozessor (41) für digitale Signale folgendes aufweist:
(a) einen Speicher (46) zum Speichern von Datenpaketen;
(b) eine Adressenerzeugungsschaltung (44) zum Erzeugen von Adressensignalen des Speichers;
(c) eine Schnittstellenschaltung (51) für seriellen Empfang zum Umwandeln eines seriell empfangenen Datenpakets, das von der Schalteinrichtung-Schnittstellenschaltung (32) zugeführt wurde, in parallele Daten;
(d) eine Schnittstellenschaltung (50) für serielle Übertragung zum Umwandeln des parallel übertragenen Datenpakets in serielle Daten, die der Schalteinrichtung-Schnittstellenschaltung (32) zugeführt werden; und
(e) eine Parallelport-Schnittstellenschaltung (49) zum Anlegen eines Steuersignals an die BORSCHT-Schaltungen (34₁ - 34ₘ) und zum Empfangen von Informationen der BORSCHT-Schaltungen (34₁ - 34ₘ).

4. Schnittstellenschaltung (3a) für Teilnehmerleitungen in einem Vermittlungssystem (3) nach Anspruch 1, bei der die Adressenerzeugungsschaltung (44) folgendes aufweist:
(a) ein erstes Datenhalteregister (62) zum Erzeugen eines ersten Adressensignals;
(b) eine Arithmethikeinheit (60) zum Empfangen des ersten Adressensignals und eines Adressenänderungssignals im Hinblick auf das erste Adressensignal, und zum Durchführen der arithmethischen Operation derselben;
(c) einen ersten Selektor (61) zum Auswählen eines Ausgangssignals der Arithmethikeinheit oder eines vorbestimmten Adressensignals des Datenpakets, und zum Zuführen des ausgewählten Ausgangssignals;
(d) ein zweites Datenhalteregister (65) zum Erzeugen eines zweiten Adressensignals;
(e) eine Adresseninkrementiereinrichtung zum Inkrementieren des zweiten Adressensignals;
(f) einen zweiten Selektor (63) zum Auswählen eines Ausgangssignals der Adresseninkrementiereinrichtung oder des vorbestimmten Adressensignals, und zum Zuführen des ausgewählten Ausgangssignals; und
(g) einen dritten Selektor (66) zum Auswählen des ersten Adressensignals oder des zweiten Adressensignals.

## Revendications

1. Circuit (3a) d'interface pour ligne d'abonné dans un système (3) de commutation pour convertir un signal analogique fourni par une ligne (33₁-33ₘ) d'abonné à une donnée de paquet numérique qui est fournie à un circuit (3b) de commutation d'un système (3) de commutation et pour convertir une donnée de paquet numérique fournie par le circuit (3b) de commutation en un signal analogique qui est fourni à la ligne (2) d'abonné, comprenant:
(a) un ensemble de circuits terminaux de lignes (désignés ci-après par l'abréviation BORSCHT (34₁-34ₘ)) pour soumettre les lignes d'abonnés (33₁-33ₘ) à un traitement de terminal;
(b) un ensemble de circuits (35₁-35ₘ) de traitement de signaux de communication par paquets, pour recevoir et émettre un signal vocal analogique en provenance de, et vers l'ensemble de BORSCHT (34₁-34ₘ);
(c) un circuit (32) d'interface de commutation connecté à l'ensemble de circuits (35₁-35ₘ) de traitement de signaux de communication par paquets pour établir une interface entre les données de paquets et le circuit (3b) de commutation du système (3) de commutation et l'ensemble de circuits (35₁-35ₘ) de traitement de signaux de communication par paquets; et
(d) une unité (31) centrale de traitement pour commander l'ensemble de circuits (35₁-35ₘ) de traitement de signaux de communication par paquets;
caractérisé en ce que
le circuit (35₁-35ₘ) de traitement de signaux de communication par paquets comprend:
un processeur (41) de signaux numériques pour assembler et désassembler le paquet, traiter le signal vocal, commander le BORSCHT (34₁-34ₘ) et prendre en charge la limitation des conflits lors de la transmission et la réception des données de paquets;
un convertisseur AN-NA (40) pour convertir un signal analogique fourni par le BORSCHT (34₁-34ₘ) en un signal numérique qui est fourni au processeur (41) de signaux numériques et convertir un signal numérique fourni par le processeur (41) de signaux numériques en un signal analogique qui est fourni au BORSCHT (34₁-34ₘ), le convertisseur AN-NA (40) étant réalisé sous la forme d'un système à suréchantillonnage; et
un circuit (42) à boucle à verrouillage de phase pour fournir un signal qui est synchrone avec un réseau de communication, au processeur (41) de signaux numériques et au convertisseur (40) AN-NA;
dans lequel
les circuits (35₁-35ₘ) de traitement de signaux de communication par paquets et l'unité (31) centrale de traitement sont connectés les uns aux autres par un bus (36) système par l'intermédiaire duquel le processeur (41) de signaux numériques exécute un traitement ou une progression d'appels et un traitement de signaux vocaux en réponse à l'instruction provenant de l'unité (31) centrale de traitement;
les BORSCHT (34₁-34ₘ) et les circuits (35₁-35ₘ) de traitement de signaux de communication par paquets sont connectés les uns aux autres par des bus locaux (37₁-37ₘ) par l'intermédiaire desquels les circuits (35₁-35ₘ) de traitement de signaux de communication par paquets commandent les BORSCHT (34₁-34ₘ);
et les circuits (35₁-35ₘ) de traitement de signaux de communication par paquets et le circuit (32) d'interface de commutation sont connectés les uns aux autres par des lignes d'entrée et de sortie pour des données série, par l'intermédiaire desquelles chacun des circuits (35₁-35ₘ) de traitement de signaux de communication par paquets et le circuit (32) d'interface de commutation reçoivent et émettent directement en série des données de paquets numériques.

2. Circuit (3a) d'interface pour ligne d'abonné dans un système (3) de commutation selon la revendication 1, dans lequel les circuits (35₁-35ₘ) de traitement de signaux de communication par paquets sont chacun constitués par un circuit intégré à grande échelle.

3. Circuit (3a) d'interface pour ligne d'abonné dans un système (3) de commutation selon la revendication 2, dans lequel le processeur (41) de signaux numériques comprend:
(a) une mémoire (46) pour stocker des données de paquets;
(b) un circuit (44) générateur d'adresses pour générer des signaux d'adresses de la mémoire;
(c) un circuit (51) d'interface de réception série pour convertir une donnée de paquet de réception série fournie par le circuit (32) d'interface de commutation en une donnée parallèle;
(d) un circuit (50) d'interface d'émission série pour convertir la donnée de paquets d'émission parallèle en une donnée série qui est fournie au circuit (32) d'interface de commutation; et
(e) un circuit (49) d'interface d'accès parallèle pour fournir un signal de commande au BORSCHT (34₁-34ₘ) et recevoir des informations du BORSCHT (34₁-34ₘ).

4. Circuit (3a) d'interface pour ligne d'abonné dans un système (3) de commutation selon la revendication 1, dans lequel le circuit (44) générateur d'adresses comprend:
(a) un premier registre (62) de maintien de donnée pour fournir un premier signal d'adresse;
(b) une unité (60) arithmétique pour recevoir le premier signal d'adresse et un signal de changement d'adresse par rapport au premier signal d'adresse et effectuant sur celui-ci une opération arithmétique;
(c) un premier sélecteur (61) pour sélectionner une sortie de l'unité arithmétique ou un signal d'adresse prédéterminé de la donnée de paquet et fournir la sortie sélectionnée;
(d) un second registre (65) de maintien de donnée pour fournir un second signal d'adresse;
(e) un moyen d'incrémentation d'adresse pour incrémenter le second signal d'adresse;
(f) un second sélecteur (63) pour sélectionner une sortie du moyen d'incrémentation d'adresse ou le signal d'adresse prédéterminé et fournir la sortie sélectionnée; et
(g) un troisième sélecteur (66) pour sélectionner le premier signal d'adresse ou le second signal d'adresse.
